# EUROPÄISCHE PATENTANMELDUNG

(11) **EP 1 463 187 A2**
(43) Veröffentlichungstag der Anmeldung: **29.09.2004**
(21) Anmeldenummer: 03024191.3
(22) Anmeldetag: 21.10.2003
(51) Int. Cl.: H02M 3/156

(54) **Verfahren zur Begrenzung des Einschaltstromes eines von einer DC-Spannungsquelle gespeisten DC-Wandlers**

(30) Priorität: 28.11.2002 DE 10255431
(71) Anmelder: Conti Temic Microelectronic GmbH, 90411 Nürnberg (DE)
(72) Erfinder: Heckel, Markus, 91616 Neusitz (DE); Kulesch, Manfred, 85049 Ingolstadt (DE)

(57) **Zusammenfassung**

Verfahren zur Begrenzung des Einschaltstromes eines von einer DC-Spannungsquelle gespeisten DC-Wandlers. Ferner betrifft die Erfindung ein Verfahren zur Bereitstellung der Betriebsspannung für eine elektronische Baugruppe, insbesondere eine Steuereinheit für Sicherheitseinrichtungen in einem Kraftfahrzeug.
Erfindungsgemäß wird zur Begrenzung des Einschaltstromes eines von einer DC-Spannungsquelle gespeisten DC-Wandlers in Abhängigkeit eines vom Einschaltstrom abhängigen Spannungswertes ein dem DC-Wandler vorgeschalteter Halbleiterschalter getaktet, so dass durch aufeinander abgestimmte Einschalt- und Ausschaltzeiten der Eingangsstrom auf einen vorgesehenen Überstromabschaltwert begrenzt wird. Dieses Verfahren zur Begrenzung des Einschaltstromes ist mit Vorteil zur Bereitstellung der Betriebsspannung für eine elektronische Baugruppe, insbesondere einer Steuereinheit für Sicherheitseinrichtungen in einem Kraftfahrzeug verwendbar.

## Beschreibung

Die Erfindung betrifft ein Verfahren zur Begrenzung des Einschaltstromes eines von einer DC-Spannungsquelle gespeisten DC-Wandlers. Ferner betrifft die Erfindung ein Verfahren zur Bereitstellung der Betriebsspannung für eine elektronische Baugruppe, insbesondere eine Steuereinheit für Sicherheitseinrichtungen in einem Kraftfahrzeug.

DC-Wandler (Aufwärtswandler, Abwärtswandler) sind bspw. aus U. Tietze Ch. Schenk, "Halbleiter-Schaltungstechnik", 10. Auflage, 1993, Seite 563 ff. bekannt und werden für Zwecke der Stromversorgung bzw. als Netzteil oder Betriebsspannungsversorgung für elektrische bzw. elektronische Baugruppen, z. B. Steuereinheiten für unterschiedlichste Funktionen in Kraftfahrzeugen eingesetzt. Neben dem in einem DC-Wandler erforderlichen Glättungskondensator enthalten solche Baugruppen oft Kondensatoren von relativ großer Kapazität. In Steuereinheiten für Kraftfahrzeuge dienen solche Kapazitäten bspw. als Autarkiekondensatoren zur Überbrückung von Spannungsunterbrechungen; solche Steuereinheiten - insbesondere die hinsichtlich ihrer Funktionssicherheit hohen Anforderungen unterliegen - sind bspw. Steuergeräte für Sicherheitseinrichtungen, wie Airbags, Überrollbügel oder Gurtstraffer.

Aus der DE 195 42 085 A1 ist eine solches Steuergerät für Sicherheitseinrichtungen in Kraftfahrzeugen bekannt, welches einen Kondensator für die Energiespeicherung und einen mit der Fahrzeugbatterie verbundenen ersten DC-Wandler, der ausgeführt als Aufwärtswandler den Kondensator mit einer gegenüber der Fahrzeugbatteriespannung höheren Spannung auflädt und einen mit dem Kondensator verbundenen zweiten DC-Wandler, ausgeführt als Abwärtswandler aufweist. Bei diesem bekannten Steuergerät werden beide DC-Wandler von einem Mikroprozessor gesteuert.

Zum Zeitpunkt des Einschaltens einer Kondensatoren enthaltenden elektrischen oder elektronischen Baugruppe, deren Netzteil einen DC-Wandler enthält, der seinerseits einen Glättungskondensator aufweist, sind diese genannten Kapazitäten in der Regel vollständig entladen. Wird nun der eine solche Baugruppe mit einer DC-Spannungsquelle verbindender Leistungsschalter betätigt, d. h. im Falle eines Steuergerätes für Kraftfahrzeuge die Zündung mittels des Zündschlüssel eingeschaltet, wirkt dies nahezu wie ein Kurzschluss mit der Folge eines hohen Stromeinschaltstoßes, also eines kurzzeitigen hohen Stromflusses. Eine solche hohe Stromaufnahme im Einschaltzeitpunkt kann die Eingangsbauteile beschädigen, da eine Strombegrenzung nur durch die passiven Bauteile dieser Eingangsbauteile erfolgt.

Solche Einschaltstromstoßprobleme sind im Stand der Technik bekannt. So wird bspw. ein solches Problem bei einer Stromversorgungsschaltung für von einer Kraftfahrzeugbatterie versorgten Verbraucher mit kapazitiven Lastanteilen gemäß der DE 43 09 974 A1 dadurch gelöst, dass zwischen dem Verbraucher und der Kraftfahrzeugbatterie ein Widerstand als strombegrenzendes Mittel geschaltet ist, der von einem steuerbaren Schalter in Abhängigkeit des über diesem Widerstand gemessenen Spannungswertes derart gesteuert wird, dass dieser Schalter geöffnet wird, wenn dieser Spannungswert oberhalb einer bestimmten Schwelle liegt, also dieser Schalter während des Fließens eines Einschaltstromes geöffnet ist, infolgedessen dieser Einschaltstrom auf einen zulässigen Wert begrenzt ist. Nachteilig bei dieser bekannten Lösung ist die im Einschaltmoment durch den strombegrenzenden Widerstand verursachte Verlustleistung.

Des weiteren ist aus der DE 44 07 051 A1 ein Verfahren zur Steuerung einer elektronischen Endstufe in einem Kraftfahrzeug bekannt, bei dem diese Endstufe mit einem Verbraucher verbunden ist und dessen Verbraucherstrom regelt oder steuert, wobei diese Endstufe von einem Steuergerät angesteuert wird. Um diese Endstufe vor Überlastung zu schützen, sieht dieses bekannte Verfahren vor, die in dieser Endstufe umgesetzte Leistung durch Takten derselben so zu steuern, dass durch die Einschalt- und Ausschaltzeiten eine maximal zulässige Impulsverlustleistung und eine maximal zulässige Dauerverlustleistung wenigstens einer Komponente der Endstufe nicht überschritten wird, wobei die Einschaltzeit abhängig von der maximal zulässigen Impulsverlustleistung und einem maximalen Vorgabewert für den Strom vorgebbar ist. Damit kann mit diesem bekannten Verfahren eine Zerstörung der Endstufe durch einen hohen Anfangsstrom verhindert werden, indem dieser Strom beim Einschalten getaktet wird. Der Nachteil dieses bekannten Verfahrens besteht einerseits in der starren Taktung, da die "Aus-Zeit fest eingestellt ist und andererseits darin, dass die Steuerung der Endstufe einen Mikroprozessor erfordert, da die Werte für die Taktung der Endstufe in Abhängigkeit des gemessenen Stromes bestimmt werden müssen, also entweder durch Berechnung aus den Werten des gemessenen Stromes oder durch Vergleich dieser Werte mit in einer Tabelle abgelegten Werten.

Die Aufgabe der Erfindung besteht darin, ein Verfahren zur Begrenzung des Einschaltstromes eines von einer DC-Spannungsquelle gespeisten DC-Wandlers anzugeben, das wirkungsvoll die beteiligten Bauteile vor Überlastung schützt und kostengünstig realisierbar ist.

Diese Aufgabe wird durch die Merkmale des Patentanspruchs 1 gelöst. Hiernach wird der Einschaltstrom des DC-Wandlers in Abhängigkeit eines vom Einschaltstrom abhängigen Spannungswertes mittels eines dem DC-Wandler vorgeschalteten Halbleiterschaltelementes derart getaktet, dass durch Abstimmung der Einschalt- und Ausschaltzeiten des Halbleiterschalters der Einschaltstrom auf einen vorgegebenen Überstromabschaltwert begrenzt wird. Damit wird eine zuverlässige Begrenzung zum Schutz der beteiligten Bauelemente erreicht, ohne die Funktion des DC-Wandlers zu beeinträchtigen, da der Einschaltstrom während der Taktung durch die in dem DC-Wandler vorhandene Induktivität linearisiert wird. Da der DC-Wandler als solcher schon einen Messwiderstand aufweist, kann dieser gleichzeitig auch für das erfindungsgemäße Verfahren verwendet werden. Damit kann dieses erfindungsgemäße Verfahren äußerst kostengünstig realisiert werden.

Ferner kann der Überstromabschaltwert eingestellt werden, in dem als Strommessmittel Widerstände mit unterschiedlichen Widerstandswerten eingesetzt werden, um somit die Stromabschaltschwelle an die verwendeten Bauteile anzupassen. Ein besonderer Vorteil ergibt sich dann, wenn zusätzlich dieser Überstromabschaltwert an den Wert der DC-Spannungsquelle angepasst wird.

Das erfindungsgemäße Verfahren kann mit Vorteil zur Bereitstellung der Betriebsspannungsversorgung für eine elektronische Baugruppe eingesetzt werden, bei dem diese elektronische Baugruppe mit einem DC-Wandler verbunden ist und der Glättungskondensator dieses DC-Wandlers als Autarkiekondensator der elektronischen Baugruppe zur Betriebsspannungsüberbrückung bei Ausfall der DC-Betriebsspannungsquelle verwendbar ist. Dies ist insbesondere dann von Vorteil, wenn die elektronische Baugruppe eine Steuereinheit für Sicherheitseinrichtungen an einem Kraftfahrzeug darstellt und der Glättungskondensator des DC-Wandlers die Funktion eines Systemautarkiekondensators für diese Steuereinheit übernimmt und zusätzlich ein Autarkiekondensator vorgesehen ist, der ebenfalls über den DC-Wandler aufgeladen und dem Systemautarkiekondensator parallel geschaltet ist.

Bei der Durchführung der beschriebenen Verfahren wird bevorzugt ein Aufwärtswandler als DC-Wandler verwendet, dessen Speicherinduktivität mit einem Strommesswiderstand verbunden ist, der seinerseits über den Halbleiterschalter an die DC-Spannungsquelle angeschlossen und der Verbindungspunkt von dem Strommesswiderstand und dem Halbleiterschalter über ein Halbleitergleichrichterelement auf Bezugspotential der DC-Spannungsquelle geführt ist.

Das erfindungsgemäße Verfahren soll nachfolgend anhand eines Ausführungsbeispieles im Zusammenhang mit der Figur erläutert werden.

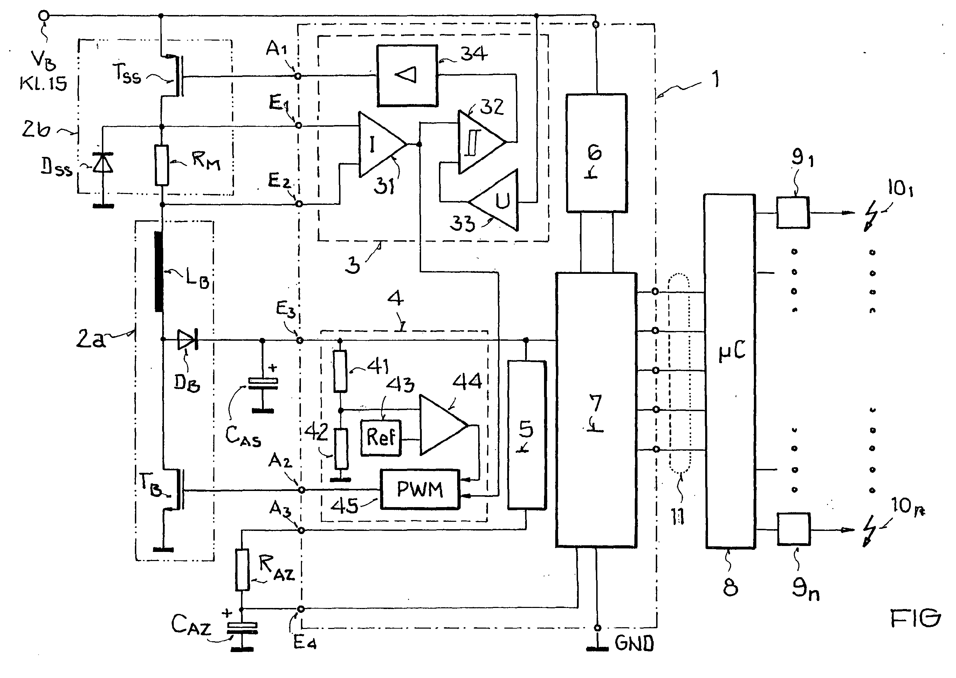

Das Blockschaltbild nach Figur 1 zeigt eine Steuerschaltung für Sicherheitseinrichtungen in einem Kraftfahrzeug, wie beispielsweise Airbags, Gurtstraffer, Gurtkraftbegrenzung und Überrollbügel. Solche Sicherheitseinrichtungen sind in dieser Figur 1 mit Bezugszeichen C₁ bis Cₙ angedeutet und werden von jeweils einer Zündendstufe 9₁ bis 9ₙ angesteuert, die ihrerseits von einem Mikroprozessor (µC) 8 ihre Steuersignale, insbesondere die Auslösesignale erhalten. In diesem Mikroprozessor 8 ist ein Auslösealgorithmus implementiert, mit dem Sensorsignale von Beschleunigungssensoren (in der Figur nicht dargestellt) bewertet werden.

Weitere Funktionen der Steuereinheit sind auf einer ASIC-Schaltung 1 realisiert, die über eine Schnittstelle 11, die auch eine SPI-Schnittstelle umfasst mit Mikroprozessor 8 verbunden ist. Dieser ASIC-Schalter dienst im wesentlichen zur Erzeugung unterschiedlichster Betriebsspannungswerte, beispielsweise die Betriebsspannung für den Mikroprozessor 8 sowie Ladespannungen für verschiedenste Autarkiekondensatoren, wie weiter unten beschrieben werden soll. Daneben realisiert diese ASIC-Schaltung 1 auch Spannungsüberwachungsfunktionen, enthält ferner einen Oszillator, eine Watch-Dog-Schaltung als auch Schaltungen für unterschiedlichste Fehleranzeigen.

An einer Klemme 15 liegt die von einer Fahrzeugbatterie bereitgestellte Betriebsspannung V_{B} an, aus der die eigentliche Betriebsspannung für die ASIC-Schaltung 1 als auch den Mikroprozessor 8 erzeugt werden.

Hierzu dient ein als Aufwärtswandler gestalteter DC-Wandler 2, der eine Induktivität L_{B} als Wandlerspule, einen Halbleiterschalter T_{B} und eine Halbleiterdiode D_{B} als Wandlerdiode aufweist. Das freie Ende, der mit dem Halbleiterschalter T_{B} seriell verbundenen Wandlerspule L_{B} ist über einen Messwiderstand R_{M} und einen Halbleiterschalter T_{SS} mit der Klemme 15 verbunden, während das freie Ende des Halbleiterschalters T_{B} auf dem Bezugspotential liegt. Die Wandlerdiode D_{B} des DC-Wandlers 2 verbindet die Serienschalter aus der Wandlerspule L_{B} und dem Halbleiterschalter D_{B} mit einem Autarkiekondensator C_{AS}, der als Systemautarkiekondensator für die Steuereinheit dient. Schließlich ist noch an die Serienschaltung aus dem Halbleiterschalter T_{SS} und dem Messwiderstand R_{M} eine Freilaufdiode D_{SS} angeschlossen, die ihrerseits auf Masse liegt.

Die ASIC-Schaltung 1 enthält eine Soft-Start-Steuerschaltung 3 sowie eine Steuerschaltung 4 zur Steuerung des Aufwärtswandlers 2a.

Die Soft-Start-Steuerschaltung 3 enthält einen Verstärker 31, dessen beiden Eingänge über die Eingänge E₁ und E₂ der ASIC-Schaltung 1 der an den Messwiderstand R_{M} auftretende Spannungsabfall erfasst wird. Dieser verstärkte Spannungsabfall wird einem im Eingang eines Komparators 32 und einer PWM-Schaltung 45 der Steuerschaltung 4 zugeführt. Dem anderen Eingang des Komparators 32 wird eine in Abhängigkeit der Betriebsspannung V_{B} erzeugte Referenzspannung zugeführt, in dem über eine Spannungsfolgerschaltung 33 mit der Klemme 15 verbunden ist. Das Ausgangssignal des Komparators 32 wird mittels eines Verstärkers 34 verstärkt und wird über den Ausgang A₁ der ASIC-Schaltung 1 als Steuersignal an die Steuerelektrode des Halbleiterschalters T_{SS} angelegt.

Die Steuerschaltung 4 enthält neben der PWM-Schaltung 45 ebenfalls einen Komparator 44, an dessen einen Eingang ein aus Widerständen 41 und 42 aufgebauter Spannungsteiler angeschlossen ist, wobei das freie Ende des Widerstandes 41 über einen Eingang E₃ der ASIC-Schaltung 1 mit dem Autarkiekondensator C_{AS} und der Wandlerdiode D_{B} und andererseits mit Schaltungsblöcken 5 und 7 verbunden ist. Das freie Ende des anderen Widerstandes 42 ist auf Masse gelegt. Am anderen Eingang des Komparators 44 ist eine Referenzspannungserzeugungsschaltung 43 angeschlossen. Das Ausgangssignal dieses Komparators 44 ist ebenfalls auf die PWM-Schaltung 45 geführt, deren Ausgangssignal als Steuersignal über den Ausgang A₂ der ASIC-Schaltung 1 als Steuersignal an die Steuerelektrode des Halbleiterschalters T_{B} gelegt wird.

Der Schaltungsblock 5 stellt eine Ladeschaltung für einen Zündautarkiekondensator C_{AZ} dar, der über einen Messwiderstand R_{AZ} und einem Eingang E₃ der ASIC-Schaltung 1 mit dieser Ladeschaltung 5 verbunden ist. Die Ladespannung an diesem Zündautarkiekondensator C_{AZ} kann über einen Eingang E₄ der ASIC-Schaltung 1 mittels eines Schaltungsblockes 7 erfasst werden, dessen Funktion weiter unten erläutert wird. Der dem Systemautarkiekondensator C_{AS} parallel geschaltete Zündautarkiekondensator C_{AZ} dient zur Bereitstellung der Zündenergie für die Sicherheitseinrichtungen C₁ bis Cₙ bei Ausfall der Betriebsspannung.

Der Schaltungsblock 7 ist über die schon genannte Schnittstelle mit dem Mikroprozessor 8 verbunden. Dieser Schaltungsblock 7 realisiert diejenigen Funktionen, die für das Verständnis der vorliegenden Erfindung nicht erforderlich sind. Da die ASIC-Schaltung 1 zusammen mit dem Aufwärtswandler 2a und der Soft-Startschaltung 2b die Funktion eines Netzteiles für die Steuerschaltung darstellt, enthält der Schaltungsblock 7 Spannungserzeugerfunktionen mit unterschiedlichsten Spannungswerten, Funktionen, die die Spannungsüberwachung und Temperaturüberwachung betreffen, Oszillatoren und Steuerschaltungen für Fehleranzeigen.

Schließlich realisiert der Schaltungsblock 6 eine Betriebsspannungsüberwachung für die Betriebsspannung V_{B} dar, hierzu ist dieser Schaltungsblock 6 mit der Klemme 15 und mit dem Schaltungsblock 7 verbunden.

Bei einem Einbruch oder Ausfall der Betriebsspannung V_{B} dienen die genannten Autarkiekondensatoren C_{AS} und C_{AZ} zur Überbrückung solcher Spannungseinbrüche und -unterbrechungen. Um bei Einschaltung der Betriebsspannung V_{B} zu verhindern, dass ein großer Strom von den Autarkiekondensatoren C_{AS} und C_{AZ} aufgenommen wird und dadurch möglicherweise passive Halbleiterbauelemente beschädigt oder zerstört werden, dient die Soft-Startschaltung 2b zur Begrenzung eines solchen Einschaltstromes. Hierzu wird der über dem Messwiderstand R_{M} der Soft-Startschaltung 2b erzeugte Spannungsabfall als verstärkte Messspannung mit dem von dem Spannungsfolger 33 erzeugten Referenzwert verglichen. In Abhängigkeit des Vergleichsergebnisses wird der Halbleiterschalter T_{SS} der Soft-Startschaltung 2b derart getaktet, dass dieser Halbleiterschalter T_{SS} bei Überschreiten des Referenzwertes ausgeschaltet und bei Unterschreitung derselben wieder eingeschaltet wird. Die Freilaufdiode D_{SS} der Soft-Startschaltung 2b dient dazu, bei ausgeschaltetem Halbleiterschalter T_{SS} den Strom der Wandlerspule L_{B} des Aufwärtswandlers 2a zu übernehmen.

Dadurch wird der Einschaltstrom wirksam begrenzt, der gleichzeitig aufgrund der Wandlerspule L_{B} des Aufwärtswandlers 2a linearisiert wird. Der für diese Soft-Startregelung verwendete Messwiderstand R_{M} ist "oberhalb der Spule" eingesetzt, so dass hierdurch dieser Messwiderstand gleichzeitig zur Regelung des Aufwärtswandlers nutzbar wird.

Der Einschaltstrom fließt durch den Halbleiterschalter T_{SS}, den Messwiderstand R_{M} und anschließend über die Wandlerspule L_{B} und die Wandlerdiode D_{B} in den Autarkiekondensator C_{AS}. Neben der Taktung des Halbleiterschalters T_{SS} der Soft-Startschaltung 2b kann bei Auftreten einer Überspannung, die ebenfalls von der ASIC-Schaltung 1 erkannt wird, die Spannungsversorgung mittels des Halbleiterschalters T_{SS} abgeschaltet werden. Wenn das Spannungsbordnetz nicht nur einen Spannungswert von 12 V, sondern auch einen Spannungswert von 42 V zur Verfügung stellt, muss der Überstromabschaltwert als Referenzwert hierin angepasst werden. Steigt beispielsweise der Spannungswert von 12 V auf 42 V, muss der Referenzwert auf einen geringeren Wert eingestellt werden, um auch bei diesem Wert die Strombelastung der Bauteile zu verringern. Neben einer zweistufigen Anpassung des Überstromabschaltwertes ist auch eine mehrstufige, spannungsabhängige möglich, so dass bei höher werdender Versorgungsspannung der zulässige Strom, bei dem eine Abschaltung des Halbleiterschalters T_{SS} der Soft-Startschaltung 2b erfolgt, geringer ist.

Die mit der Soft-Startschaltung 2b und der zugehörigen Steuerschaltung 3 erzielte Überstromabschaltung dient auch dem Schutz des Strombegrenzungswiderstandes R_{AZ} und einem der Aufladung des Autarkiekondensators C_{AZ} dienenden Transistors, der in der Ladeschaltung 5 vorgesehen ist. Dieser Widerstand R_{AZ} dient als Strombegrenzungswiderstand für den Ladestrom dieses Zündautarkiekondensators.

## Patentansprüche

1. Verfahren zur Begrenzung des Einschaltstromes eines von einer DC-Spannungsquelle (V_{B}) gespeisten DC-Wandlers (2), bei dem beim Einschalten der DC-Spannungsquelle (V_{B}) in Abhängigkeit eines vom Einschaltstrom abhängigen Spannungswertes (U_{RM}) durch Takten eines dem DC-Wandlers (2) vorgeschalteten taktbaren Halbleiterschalters (T_{SS}) dessen Einschalt- und Ausschaltzeiten derart aufeinander abgestimmt sind, dass der Einschaltstrom auf einen vorgesehenen Überstromabschaltwert begrenzt wird.

2. Verfahren nach Anspruch 1, bei dem mittels eines in Reihe zu dem Halbleiterschalter (T_{SS}) geschalteten Strommessmittels (R_{M}) ein vom Einschaltstrom abhängiger Spannungswert erzeugt wird, der neben der Steuerung des Halbleiterschalters (T_{SS}) gleichzeitig zur Steuerung des DC-Wandlers (2) dient.

3. Verfahren nach Anspruch 1 oder 2, bei dem der Überstromabschaltwert einstellbar ist.

4. Verfahren nach Anspruch 3, bei dem in Abhängigkeit des Wertes der DC-Spannungsquelle (V_{B}) der Überstromabschaltwert eingestellt wird.

5. Verfahren zur Bereitstellung der Betriebsspannungsversorgung für eine elektronische Baugruppe (1, 8, 9), bei dem die elektronische Baugruppe (1, 8, 9) mit einem DC-Wandler (2) verbunden ist und beim Verbinden des DC-Wandlers (2) mit einer DC-Spannungsquelle (V_{B}) das Verfahren nach einem der vorangehenden Ansprüche durchgeführt wird und der Glättungskondensator (C_{AS}) des DC-Wandlers (2) als Autarkiekondensator der elektronischen Baugruppe (1, 8, 9) zur Betriebsspannungsüberbrückung bei Ausfall der DC-Betriebsspannungsquelle (V_{B}) verwendet wird.

6. Verfahren nach Anspruch 5, bei dem die elektronische Baugruppe (1, 8, 9) eine Steuereinheit für Sicherheitseinrichtungen in einem Kraftfahrzeug darstellt und die Zündenergie zur Auslösung wenigstens einer Sicherheitseinrichtung (9) im Falle des Ausfalles der Betriebsspannungsversorgung (V_{B}) der Steuereinheit von wenigstens einem Zündautarkiekondensator (C_{AZ}) bereitgestellt wird, der über eine Ladeschaltung (5) und einen Strombegrenzungswiderstand (R_{AZ}) dem Glättungskondensator (C_{AS}) des DC-Wandlers (2) parallel geschaltet ist.

7. Schaltungsanordnung zur Durchführung des Verfahrens nach einem der vorangehenden Ansprüche, bei dem als DC-Wandler (2) ein Aufwärtswandler verwendet wird, dessen Speicherinduktivität (L_{B}) mit einem Strommesswiderstand (R_{M}) verbunden ist, der seinerseits über den Halbleiterschalter (Tₛₛ) an die DC-Spannungsquelle (V_{B}) angeschlossen ist und der Verbindungspunkt von dem Strommesswiderstand (R_{M}) und dem Halbleiterschalter (Tₛₛ) über ein Halbleitergleichrichterelement (Dₛₛ) auf Bezugspotential der DC-Spannungsquelle (V_{B}) geführt ist.
